# EUROPÄISCHE PATENTSCHRIFT

(11) **EP 0 469 382 B1**
(45) Veröffentlichungstag und Bekanntmachung des Hinweises auf die Patenterteilung: **27.03.1996**
(21) Anmeldenummer: 91111880.0
(22) Anmeldetag: 16.07.1991
(51) Int. Cl.: H04B 10/20

(54) **Übertragungseinrichtung zur Übertragung von Nachrichten und von zusätzlichen Signalen**
Transmission apparatus for transmitting messages and additional signals
Dispositif de transmission de messages et de signaux supplémentaires

(30) Priorität: 03.08.1990 DE 4024739
(43) Veröffentlichungstag der Anmeldung: 05.02.1992
(73) Patentinhaber: SIEMENS AKTIENGESELLSCHAFT, D-80333 München (DE); KATHREIN-WERKE KG, D-83022 Rosenheim (DE)
(72) Erfinder: Lang, Thomas, Dipl.-Ing., W-8028 Taufkirchen (DE); Pichlmayer, Erwin, Dipl.-Ing., W-8000 München 60 (DE); Mann, Burkhard, Dipl.-Ing., W-8208 Kolbermoor (DE); Sotek, Karel, Dipl.-Ing., W-8091 Griesstätt (DE)
(74) Vertreter: Fuchs, Franz-Josef, Dr.-Ing.

(56) Entgegenhaltungen:
- DE-A- 3 129 752
- US-A- 4 709 418

## Beschreibung

Die Erfindung bezieht sich auf eine wie im Oberbegriff des Patentanspruchs 1 angegebene Übertragungseinrichtung zur Übertragung von Nachrichten und zusätzlichen Signalen.

Eine derartige Übertragungseinrichtung ist bereits aus der DE-Z telcom report 12 (1989), Heft 5, Seiten 164-167 bekannt. Bei der bekannten Übertragungseinrichtung werden Breitbandsignale über Koaxialkabel übertragen. Die übertragenen Nachrichten enthalten jeweils Fernsehkanäle, die an eine Anzahl von Teilnehmern verteilt werden. Außer den zu verteilenden Nachrichten werden über das Koaxialkabel zusätzliche Signale übertragen. Die zusätzlichen Signale werden außerhalb des Nutzfrequenzbereiches übertragen. Um dies zu ermöglichen, sind in das Übertragungssystem entsprechende Einrichtungen integriert.

Eine Übertragungseinrichtung auf Basis optischer Übertragung ist auch aus der DE-A-3 129 752 bekannt.

Aufgabe der Erfindung ist es, eine wie im Oberbegriff des Patentanspruchs 1 angegebene Übertragungseinrichtung derart auszubilden, daß die Übertragung zusätzlicher Signale durch eine einfach realisierbare Ergänzung des unidirektionalen Nachrichtenübertragungsnetzes ermöglicht wird.

Gemäß der Erfindung wird die Übertragungseinrichtung zur Lösung dieser Aufgabe in der im kennzeichnenden Teil des Patentanspruchs 1 angegebenen Weise ausgebildet. Dabei können über das Zusatzsignal-Übertragungsnetz Signale von Hilfs- und/oder Zusatzkanälen übertragen werden. Die optischen Koppler des Zusatzsignal-Übertragungsnetzes dienen in der einen Übertragungsrichtung als Verteiler und in der anderen Übertragungsrichtung als Sammler.

Durch die erfindungsgemäßen Maßnahmen ergibt sich in vorteilhafter Weise eine Übertragungseinrichtung, die mit vergleichsweise einfach realisierbaren Mitteln eine Übertragung zusätzlicher Signale ohne Beeinträchtigung der Nachrichtenübertragung ermöglicht.

Das Zusatzsignal-Übertragungsnetz kann die gleiche oder eine ähnliche Streckenstruktur aufweisen wie das Nachrichten-Übertragungsnestz. Zweckmäßigerweise werden im Zusatzsignal-Übertragungsnetz passive Koppler von der gleichen Art wie im Nachrichten-Übertragungsnetz vorgesehen, jedoch bidirektional betrieben.

Insbesondere für Übertragungseinrichtungen mit mehreren Ebenen sind die Maßnahmen nach Anspruch 2 zweckmäßig.

Das unidirektionale Nachrichten-Übertragungsnetz kann ein verzweigtes Übertragungsnetz mit Baumstruktur sein, das mehrere Netzebenen aufweist. In diesem Fall kann es zweckmäßig sein, das Zusatzsignal-Übertragungsnetz nur bis zu einer vorgegebene Zwischenebene zu führen. Im Falle eines Programmverteilnetzes reicht das bidirektionale Übertragungsnetz insbesondere bis zu Verstärkerpunkten, von denen aus Programme an jeweils mehrere Teilnehmerstellen verteilt werden und Zusatzsignale jedenfalls nicht bei allen dieser Teilnehmer benötigt werden.

Bei der Weiterbildung nach Anspruch 3 ist das Programmverteilnetz insbesondere Bestandteil eines Fernseh-Verteilsystems, sind die Hilfs- und/oder Zusatzkanäle für das Programmverteilnetz insbesondere Überwachungssignale zur Netzüberwachung, Dienstleitungssignale für Dienstleitungstelefon, Fernsehsignale, Rückwärtsdaten, schaltbare TV-Rückkanäle, Fernwirksignale und/oder Signale zur Laser-Schutz-Abschaltung.

Zweckmäßigerweise enthält das Zeitsignal-Übertragungsnetz Serviceeinheiten, die entsprechend Anspruch 4 ausgebildet sind.

Die Weiterbildungen nach den Ansprüchen 5 und 6 sind für den Informationsaustausch zwischen den Serviceeinheiten von Vorteil.

Enthält die Übertragungseinrichtung eine Vorrichtung zur Laser-Schutz-Abschaltung, so wird die Übertragungseinrichtung zweckmäßiger Weise entsprechend Anspruch 7 ausgebildet.

Die Vorrichtung zur Laser-Schutzabschaltung enthält zweckmäßigerweise in der Breitbandkommunikations-Verstärkerstelle eine übergeordnete Serviceeinheit, die über die untergeordneten Serviceeinheiten die Empfänger der an die Verstärkerstelle angeschlossenen Verstärkerpunkte daraufhin überwacht, ob sie Licht empfangen oder nicht. Die Bildung entsprechender Zustandskriterien in den Empfängern kann durch Auswertung des optischen Empfangspegels oder durch Auswertung der empfangenen elektrischen Signale erfolgen.

Zwischen den Lasersendern und den daran angeschlossenen optischen Kopplern herrscht jeweils die maximale optische Leistung. Die jeweils auf den optischen Koppler folgenden Lichtwellenleiter erhalten dagegen nur einen Bruchteil dieser Leistung. Es kann daher genügen, eine Abschaltung des Lasersenders nur bei einer Unterbrechung des zwischen Lasersender und optischen Koppler angeordneten Lichtwellenleiters vorzusehen. Andererseits kann gegebenenfalls auch bereits dann eine Abschaltung erforderlich sein, wenn ein zwischen optischen Kopplern und Verstärkerpunkt gelegener Lichtwellenleiter unterbrochen wird. Im allgemeinen gelten dann allerdings wegen der unterschiedlichen Lichtpegel auch unterschiedliche Abschaltzeit-Bedingungen.

Für die zwischen Lasersender und optischem Koppler gelegenen Lichtwellenleiter könnte man an den Eingängen der optischen Koppler jeweils eine Überwachungsvorrichtung vorsehen, die den Empfang oder Nichtempfang von Licht für diese Stelle meldet.

Solche zusätzlichen Maßnahmen werden bei der Weiterbildung der Erfindung nach Anspruch 7 in vorteilhafter Weise vermieden. Dabei kann es zweckmäßig sein, mittels eines zyklischen Codierungsverfahrens die Datensicherheit der Übertragung zu erhöhen: Dabei können sowohl fehlererkennende wie auch fehlerkorrigierende Codierungsverfahren benutzt werden. In diesem Fall kann ggf. nur eine Abfrage zur Abschaltung des Senders genügen. Die Auswahl des Verfahrens wird zweckmäßigerweise in Abhängigkeit von der Netztopologie gewählt.

Bei einer ersten Variante der Weiterbildung nach Anspruch 7 wird die Abschaltung eines Lasersenders ausgelöst, sobald von den vom betreffenden Lasersender gespeisten Empfängern eine vorgegebene Anzahl von Meldungen "kein Licht" an die zugehörige untergeordnete Serviceeinheit abgegeben wird. Diese Variante dient dazu, bei einer Unterbrechung der zwischen Lasersender und optischem Koppler gelegenen Faser, die die höhere optische Leistung führt, eine Abschaltung des Lasersenders herbeizuführen.

Eine besonders schnelle Laser-Schutz-Abschaltung ergibt sich dabei dann, wenn die Auslösung bereits dann erfolgt, wenn von den vom betreffenden Lasersender gespeisten Empfängern einer die Meldung "kein Licht" abgibt. Allerdings können in diesem Fall, z.B. bedingt durch Störungen oder durch eine Unterbrechung eines zwischen optischem Koppler und Empfänger gelegenen Lichtwellenleiters, unnötige Abschaltungen vorkommen.

Erhält die übergeordnete Serviceeinheit die Überwachungsmeldungen der Empfänger so schnell aufeinanderfolgend, daß unter Berücksichtigung der Abschalt-Zeit-Forderungen eine zweite Meldung abgewartet werden kann, so wird die Abschaltung eines Lasersenders zweckmäßigerweise erst dann ausgelöst, wenn von den vom betreffenden Lasersender gespeisten Empfängern zwei oder mehr die Meldung "kein Licht" abgeben. Auf diese Weise wird erreicht, daß eine Unterbrechung eines der zwischen optischem Koppler und Empfänger angeordneten Lichtwellenleiter noch keine Auslösung der Laser-Schutz-Abschaltung bewirkt. Außerdem ist in vorteilhafter Weise eine einfach realisierbare Eingrenzung des Fehlerortes möglich.

Herrscht auf den zwischen den optischen Kopplern und den Empfängern angeordneten Lichtwellenleitern eine optische Leistung, die eine Laser-Schutz-Abschaltung bereits bei Bruch eines dieser Lichtwellenleiter erforderlich macht, so wird die Abschaltung eines Lasersenders dann ausgelöst, wenn von den vom betreffenden Lasersender gespeisten Empfängern ein einziger eine vorgegebene Anzahl von Meldungen "kein Licht" abgibt. Insbesondere erfolgt die Abschaltung des Lasersenders, sobald ein Empfänger in zwei aufeinanderfolgenden Abfragezyklen jeweils die Meldung "kein Licht" abgibt.

Im Falle der Sicherheitscodierung kann die Abschaltung nach einer einmaligen Fehlermeldung des dem betreffenden Abzweig zugehörigen optischen Empfängers ausgelöst werden.

Im Hinblick auf eine Übertragung von Überwachungs- und/oder Dienstleitungssignalen werden eine Zentralstelle, Knotenstellen und/oder Endstellen des Zusatzsignal-Übertragungsnetzes insbesondere entsprechend Anspruch 8 ausgebildet.

Ausgehend von der in Anspruch 8 angegebenen Ausführungsform gestatten es die Maßnahmen nach Anspruch 9 zusätzlich Fernsehsignale und/oder Daten zu übertragen.

Mit Hilfe der Maßnahmen nach Anspruch 10 können mittels des Zusatzsignal-Übertragungsnetzes Fernwirksignale und/oder Signale zur Laser-Schutz-Abschaltung vorteilhaft übermittelt werden.

Die Erfindung wird anhand der in den Figuren dargestellten Ausführungsbeispiele näher erläutert.

Es zeigen
- Fig. 1: eine Übertragungseinrichtung zur Übertragung von Breitbandsignalen mit Service-Einrichtung und
- Fig. 2: weitere Einzelheiten der in Fig. 1 gezeigten Einrichtung.

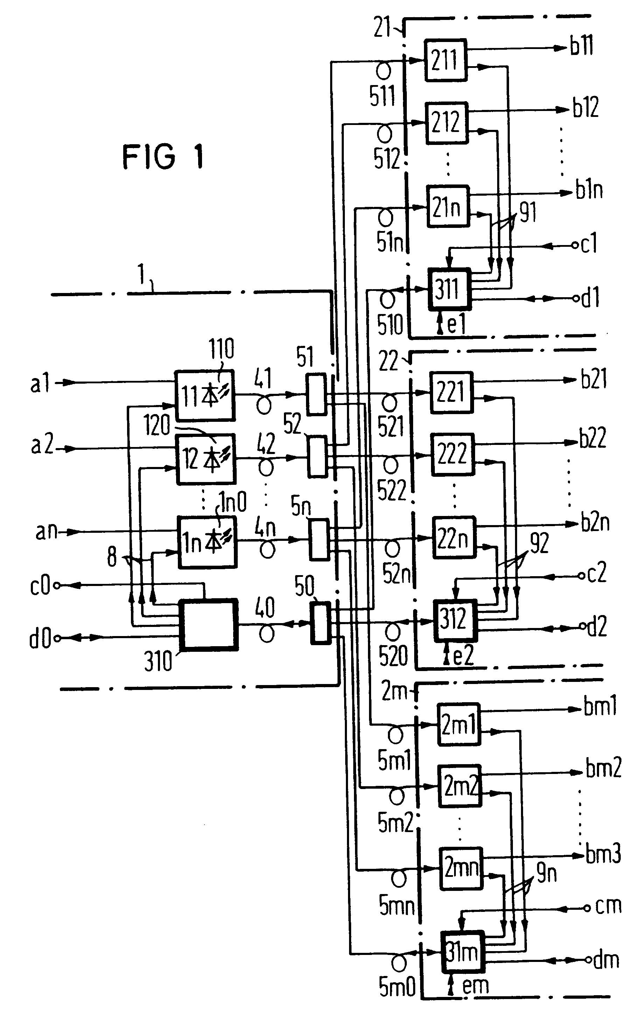

Fig. 1 zeigt eine Fernseh-Verteileinrichtung mit zugehöriger Service-Einrichtung. Die sendende Breitbandkommunikations-Verstärkerstelle nachfolgend mit "BK-Verstärkerstelle" bezeichnet, ist für n Übertragungswege ausgelegt. Je Übertragungsweg ist ein Eingang a1...an mit daran angeschlossenen Sendern 11...1n vorgesehen. Jeder dieser Sender 11...1n verteilt sein Programm über einen eigenen, passiven optischen Koppler 51...5n über eine Zahl von m Zweigen an m BK-Verstärkerpunkte 21...2m. An jedem dieser BK-Verstärkerpunkte 21...2m ist je Übertragungsweg ein eigener Empfänger 211...21n; 221...22n; 2m1...2mn vorgesehen. Uber diese Empfänger werden die Nachrichten bzw. Frequenzbänder der entsprechenden Übertragungswege empfangen. Zweckmäßigerweise wird die Anzahl n der Übertragungswege auf 8 und die Zahl m der Zweige pro Übertragungsweg auf 16 begrenzt. Auf den Übertragungswegen wird jeweils eine Vielzahl von Programmen, insbesondere Fernsehkanäle, übertragen.

Die passiven Koppler 51...5n sind jeweils über einen Lichtwellenleiter 41...4n an den zugeordneten Sender 11...ln angeschlossen. Die Sender 11...1n enthalten jeweils eine Laserdiode 110...1n0. Die passiven optischen Koppler 51...5n können am selben Ort wie die Sender 11...ln oder davon abgesetzt untergebracht sein. Zwischen den Kopplern 51...5n und den Empfängern der Verstärkerpunkte 21...2m befinden sich die Lichtwellenleiter 511...5mn.

Die Service-Einrichtung besteht aus der übergeordneten Serviceeinheit 310 und den untergeordneten Serviceeinheiten 311...31m, die über ein bidirektionales Zusatzsignal-Übertragungsnetz miteinander verbunden sind. Das Zusatzübertragungsnetz ist ein Lichtwellenleiter- bwz. Fasernetz mit dem passiven optischem Koppler 50. Es hat die gleiche Struktur wie die des Fernsehsignalverteilnetzes und dient zur Übertragung von Servicesignalen. Diese Servicesignale sind insbesondere Signale einer Vorrichtung zur Laser-Schutz-Abschaltung für Laser der Sender 11...1n und/oder in der BK-Technik üblicher Dienste wie Überwachung, Dienstleitung, Rückwärtsdaten und schaltbare TV-Rückkanäle.

Zwischen der übergeordneten Serviceeinheit 310 und dem passiven optischen Koppler 50 befindet sich der Lichtwellenleiter 40. Der passive optische Koppler 50 ist am selben Ort wie die optischen Koppler 51...5n untergebracht. Die übergeordnete Serviceeinheit 310 besitzt einen Eingang d0 für Überwachungs- und Dienstleitungssignale und einen Ausgang c0 für Fernseh- und Datensignale. Die zentrale Serviceeinheit 310 ist ferner mit je einem Ausgang über die Leitungen 8 bzw. 81...8n an je einen Steuereingang der Sender 11...1n geführt.

Die Verstärkerpunkte 21...2m enthalten jeweils eine untergeordnete Serviceeinheit 311...31m. Zwischen dem optischen Koppler 50 und den Serviceeinheiten 311...31m befindet sich jeweils ein Lichtwellenleiter 510...5m0. Die Serviceeinheiten 311...31m der Verstärkerpunkte 21...2m haben jeweils einen Eingang e1...em für Fernwirksignale, einen Eingang c1...cm für Fernseh- und/oder Datensignale und einen Ein-/Ausgang d1...dm für Überwachungs- und/oder Dienstleitungssignale. Die Serviceeinheiten 311...31m sind außerdem mit je einem Eingang an die Überwachungsausgänge der im betreffenden Verstärkerpunkt vorgesehenen Empfänger angeschlossen. Die Überwachungsleitungen 91...9n verbinden die Überwachungsausgänge der Empfangsverstärker 211...2mn mit den Überwachungseingängen der Serviceeinheiten 311...31m und führen jeweils die aktuelle Meldung "Licht" oder "kein Licht".

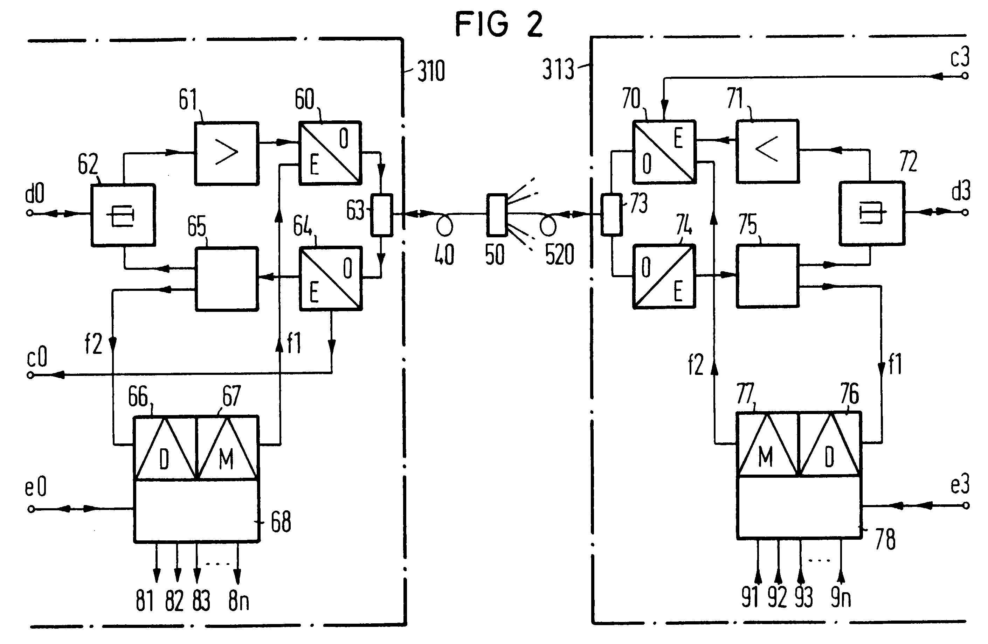

Fig. 2 zeigt weitere Einzelheiten der Service-Einrichtung der in Fig. 1 dargestellten Fernsehverteileinrichtung.

Von den an den Koppler 50 angeschlossenen untergeordneten Serviceeinheiten ist nur die im Verstärkerpunkt 23 nach Fig. 1 enthaltende Serviceeinheit 313 dargestellt. Die Serviceeinheiten der weiteren Verstärkerpunkte sind in gleicher Weise aufgebaut.

Die Baugruppen der zentralen Serviceeinheit 310 und die untergeordneten Serviceeinheiten 311...31m arbeiten bidirektional für die zwischen dem Anschluß d0 der Zentralstation und dem Anschluß übertragenen Service-Signale, die insbesondere Überwachungssignale und Dienstleistungssignale sind. Die digitalen Signale der Laser-Schutz-Abschaltung und Fernwirksignale werden bidirektional, Rückwärtsdaten und Nachrichten von TV-Rückkanälen unidirektional vom Verstärkerpunkt zur Verstärkerstelle übertragen.

Die Baugruppen der Service-Einrichtung in der Verstärkerstelle 1 und im Verstärkerpunkt 23 sind fast gleich aufgebaut.

Die in der Verstärkerstelle vorgesehene übergeordnete Serviceeinheit 310 des Zusatzsignal-Übertragungsnetzes hat einen Anschluß d0 für Überwachungs- und/oder Dienstleitungssignale. Der Anschluß d0 ist mit dem Scheitel der elektrischen Gabel 62 verbunden. Der eine Zweig der elektrischen Gabel 62 ist über den Sendeverstärker 61 und den elektro-optischen Wandler 60 an einen Zweig der optischen Gabel 63 geführt. Der andere Zweig der optischen Gabel 63 ist über den opto-elektrischen Wandler 64 und den elektrischen Empfangsverstärker 65 an den anderer Zweig der elektrischen Gabel 62 geführt.

In der Serviceeinheit 310 werden durch die elektrische Gabel 62 die am Anschluß d0 ankommenden und die vom Anschluß d0 abgehenden Signale voneinander getrennt. Im Sendeverstärker 61 werden die abgehenden Signale des Anschlusses d0 soweit verstärkt, daß der optische Sender 60 optimal ausgesteuert wird. Das optische Signal des Senders 60 wird über die optische Gabel 63 auf die Lichtwellenleiter-Strecke 40 gesendet. Als optische Gabel 63 kann bei gleicher Licht-Wellenlänge ein optischer Koppler für Hin- und Rückrichtung dienen. Bei unterschiedlichen Wellenlängen kann an die Stelle des optischen Kopplers ein Wellenlängenmultiplexer treten. In beiden Fällen ist der optische Empfänger 64 über die Entkopplungsdämpfung der Gabel 63 hinreichend vor dem Licht des Senders 60 am gleichen Ort geschützt.

Das ankommende Licht vom anderen Ende der Lichtwellenleiter-Strecke gelangt über die optische Gabel 63 an den optischen Empfänger 64, wo es optisch-elektrisch umgesetzt wird. Der folgende Verstärker 65 verstärkt die elektrischen Signale auf ihren Sollwert. Daraufhin werden die Überwachungs- und Dienstleitungs-Signale über die elektrische Gabel 62 zum Anschluß d0 ausgekoppelt.

In der Serviceeinheit 313 des BK-Verstärkerpunktes 23 ist der Anschluß d3 für Überwachungs und/oder Dienstleitungssignale vorgesehen. Der Anschluß d3 ist mit dem Scheitel der elektrischen Gabel 72 verbunden. Der eine Zweig der elektrischen Gabel 72 ist über den Sendeverstärker 71 und den elektro-optischen Wandler 70 an einen Zweig der optischen Gabel 73 geführt. Der andere Zweig der optischen Gabel 73 ist über den opto-elektrischen Wandler 74 und den Empfangsverstärker 75 an den anderen Zweig der elektrischen Gabel 72 geführt. Die Scheitel der optischen Gabeln 63 und 73 sind über den passiven optischen Koppler 50 und die Lichtwellenleiter 40 und 520 miteinanderverbunden.

Im Verstärkerpunkt 23 werden durch die elektrische Gabel 72 die am Anschluß d3 ankommenden und die vom Anschluß d3 abgehenden Signale voneinander getrennt. Im Sendeverstärker 71 werden die abgehenden Signale des Anschlusses d3 soweit verstärkt, daß der optische Sender 70 optimal ausgesteuert wird. Das optische Signal des Senders 70 wird über die optische Gabel 73 auf die Lichtwellenleiter-Strecke 520 gesendet. Als optische Gabel 73 kann bei gleicher Licht-Wellenlänge ein optischer Koppler für Hin- und Rückrichtung dienen. Bei unterschiedlichen Wellenlängen kann an die Stelle der optischen Gabel 73 ein Wellenlängen-Multiplexer treten. In beiden Fällen ist der optische Empfänger 74 über die Entkopplungsdämpfung der Gabel 73 hinreichend vor dem Licht des Senders 70 am gleichen Ort geschützt.

Das ankommende Licht vom anderen Ende der Lichtwellenleiter-Strecke gelangt über die optische Gabel 73 an den optischen Empfänger 74, wo es optisch-elektrisch umgesetzt wird. Der folgende Verstärker 75 verstärkt die elektrischen Signale auf ihren Sollwert. Daraufhin werden die Überwachungs- und Dienstleitungs-Signale über die elektrische Gabel 72 zum Anschluß d3 ausgekoppelt.

Die Serviceeinheit 313 hat einen Eingang c3 für Fernsehsignale und/oder Daten. Dieser Eingang c3 ist an einen weiteren Eingang des elektro-optischen Wandlers 70 geführt. In der BK-Verstärkerstelle ist ein weiterer Ausgang des opto-elektrischen Wandlers 64 an den Ausgang c0 für die Fernsehsignale und/oder Daten geführt, die vom BK-Verstärkerpunkt 23 oder anderern nicht dargestellten Verstärkerpunkten stammen.

Die Breitbandsignale, Rückwärtsdaten und schaltbare TV-Rückkanäle werden nach vorhergehender Modulation am optischen Sender 70 in der Serviceeinheit 313 eingespeist und am optischen Empfänger 64 der Serviceeinheit 310 zur Demodulation in einer an den Anschluß c0 anzuschließenden, nicht dargestellten Demodulationseinrichtung ausgekoppelt.

Nach Figur 2 enthält die BK-Verstärkerstelle 1 eine zentrale Fernwirkeinheit 68, die Signale, insbesondere Abfragesignale einer ersten Frequenz f1 aussendet und Signale, insbesondere Antwortsignale einer zweiten Frequenz f2 empfängt. Zur Modulation der Abfragesignale dient der Modulator 67, zur Demodulation der Antwortsignale der Demodulator 66. Die untergeordnete Serviceeinheit empfängt Signale der ersten Frequenz f1 und sendet Signale der zweiten Frequenz f2 aus. Zur Modulation der Antwortsignale dient der Modulator 77, zur Demodulation der empfangenen Abfragesignale der Demodulator 76. Die beiden Fernwirkeinheiten 68 und 78 sind mit ihrem Eingang an einen zusätzlichen Ausgang des elektrischen Empfangsverstärkers 65 bzw. 75 angeschlossen und mit ihrem Ausgang jeweils an einen zusätzlichen Eingang des elektro-optischen Wandlers 60 bzw. 70 geführt.

Die Signale für die Laser-Schutz-Abschaltung und die Fernwirksignale werden im Zeitmultiplex übertragen. Von einem Mikroprozessor gesteuert, fragt die übergeordnete Serviceeinheit 310 der BK-Verstärkerstelle 1 sequentiell die untergeordneten Serviceeinheiten in den Verstärkerpunkten 21...2m ab, ob ihre zugeordneten Empfänger des Verteilsystems die erwarteten Signale empfangen. Die Antworten der untergeordneten Serviceeinheiten werden ausgewertet. Die zugehörigen Sender 11...1n der Fernsehverteileinrichtung in der Verstärkerstelle 1 werden dementsprechend durch Fernwirksignale gesteuert oder im Fehlerfall durch Signale der Vorrichtung zur Laser-Schutz-Abschaltung abgeschaltet. Für die Abfragung der Information wird zweckmäßigerweise eine serielle asynchrone Datenübertragung nach dem Zeitmultiplexverfahren verwendet.Die gegebenenfalls zusammen mit den Signalen zur Laser-Schutz-Abschaltung übertragenen Fernwirksignale können analoger oder digitaler Art sein und dienen insbesondere zur Modulationsgradregelung der Lasersender der Programmverteileinrichtung oder zur Temperaturüberwachung.

Zum Zwecke der Laser-Schutz-Abschaltung kann der Zustand eines Lichtwellenleiters bzw. einer Faser 41...4n, an die mittels eines der Abzweiger 51...5n mehrere Verstärkerpunkte angeschlossen sind, durch Abfragen von zwei beliebigen Verstärkerpunkten dieses Zweiges erfaßt werden. Dies erleichtert erheblich die Zeitbedingungen beim Erfassen eines Faserbruches in den von der optischen Leistung her kritischen Teilen des Netzes.

Bei einer zweckmäßigen Ausgestaltung der Programmverteileinrichtung haben die Frequenzen etwa die folgenden Werte:

| | |
|---|---|
| Fernsehsignale | 10 - 30 MHz |
| Daten rückwärts | 6 - 10 MHz |
| Überwachungssignale | 5 - 6 MHz |
| Dienstkanal | 3,5- 5 MHz |
| f1 | 1,65 MHz |
| f2 | 2,45 MHz |

Dabei werden die Dienstleitungssignale in Frequenz-Getrenntlage, die Überwachungssignale in Halbduplexbetrieb und die Fernwirksignale im Frequenz-Getrenntlageverfahren übertragen. Vor dem vollen Wiedereinschalten eines Lasersenders wird mit reduzierter mittlerer optischer Leistung geprüft, ob die Unterbrechung beseitigt wurde.

## Patentansprüche

1. Übertragungseinrichtung zur unidirektionalen Übertragung von Nachrichten über ein verzweigtes Breitband-Übertragungsnetz und zur bidirektionalen Übertragung von zusätzlichen Signalen,
**dadurch gekennzeichnet,**
daß die Nachrichten und die zusätzlichen Signale jeweils über ein eigenes Übertragungsnetz übertragbar sind und daß das Breitband-Übertragungsnetz Lichtwellenleiter (41...4n, 511...5m3) und passive optische Koppler (51...5n) enthält und daß dem unidirektionalen Nachrichten-Übertragungsnetz ein bidirektionales, Lichtwellenleiter (40, 5m0) und passive optische Koppler (50) enthaltendes Zusatzsignal-Übertragungsnetz zugeordnet ist.

2. Übertragungseinrichtung nach Anspruch 1,
**dadurch gekennzeichnet,**
daß die Struktur des bidirektionalen Übertragungsnetzes (40, 5m0, 50) der Struktur wenigstens eines Teiles des unidirektionalen Übertragungsnetzes (41...4n; 511...5m3; 51...5n) gleicht.

3. Übertragungseinrichtung nach Anspruch 1 oder 2,
**dadurch gekennzeichnet,**
daß das unidirektionale Übertragungsnetz (41...4n; 511...5m3; 51...5n) ein Programmverteilnetz ist, bei dem Programme von einer Verstärkerstelle an Verstärkerpunkte verteilt werden und daß das bidirektionale Übertragungsnetz (41...4n; 511...5m3; 51...5n) als Service-Netz Hilfs- und/oder Zusatzkanäle (c0, c1...cm; d0, d1...dm; f0, g1...gm) für das Programmverteilnetz enthält.

4. Übertragungseinrichtung nach einem der Ansprüche 1 bis 3,
**dadurch gekennzeichnet,**
daß das Zusatzsignal-Übertragungsnetz einer Zusatzsignal-Übertragungseinrichtung angehört, bei der untergeordnete Serviceeinheiten mittels einer übergeordneten Serviceeinheit abfragbar sind und die übergeordnete Serviceeinheit eine Auswertevorrichtung zur Auswertung der Antwortsignale enthält und daß Einrichtungen des unidirektionalen Übertragungsnetzes mittels der bei der Auswertung gewonnenen Signale steuerbar sind.

5. Übertragungseinrichtung nach Anspruch 4,
**dadurch gekennzeichnet,**
daß die untergeordneten Serviceeinheiten in zeitlicher Folge durch die übergeordnete Serviceeinheit abfragbar sind und daß für die Übertragung der Abfrage- und Antwortinformationen eine Vorrichtung zur seriellen asynchronen Datenübertragung nach dem Zeitmultiplexverfahren vorgesehen ist.

6. Übertragungseinrichtung nach Anspruch 5,
**dadurch gekennzeichnet,**
daß die Abfragsignale und die Antwortsignale jeweils einem hochfrequenten Träger (f1; f2) aufmoduliert sind.

7. Übertragungseinrichtung nach Anspruch 5,
**dadurch gekennzeichnet,**
daß die optischen Koppler (41...4n) des Programmverteilnetzes über je einen Lichtwellenleiter (41...4n) an einen Lasersender der Verstärkerstelle angeschlossen sind und daß die über je einen weiteren Lichtwellenleiter (511...5mn) an den optischen Koppler (41...4n) angeschlossenen Empfänger (21...2m) der Verstärkerpunkte jeweils eine Überwachungsvorrichtung enthalten, die den Empfang oder Nichtempfang von Licht an eine untergeordnete Serviceeinheit meldet und daß die Verstärkerstelle eine zentrale Serviceeinheit (310) enthält, die die untergeordneten Serviceeinheiten in zeitlicher Folge abfragt und die Abschaltung eines Lasersenders auslöst, sobald von den vom betreffenden Lasersender gespeisten Empfängern eine vorgegebene Anzahl von Meldungen "kein Licht" an die zugehörige untergeordnete Serviceeinheit abgegeben wird und/oder von einem der Empfänger eine vorgegebene Anzahl aufeinanderfolgender Meldungen "kein Licht" abgegeben wird.

8. Übertragungseinrichtung nach einem der Ansprüche 1-7,
**dadurch gekennzeichnet,**
daß bei wenigstens zwei Stellen des Zusatzsignal-Übertragungsnetzes ein Anschluß (d0, d3) für Überwachungs- und/oder Dienstleitungssignale mit dem Scheitel einer elektrischen Gabel (62, 72) verbunden und der eine Zweig der elektrischen Gabel (62, 72) über einen Sendeverstärker (61, 71) und einen elektro-optischen Wandler (60, 70) an einen Zweig einer optischen Gabel (63, 73) geführt und der andere Zweig der optischen Gabel (63, 73) über einen opto-elektrischen Wandler (64, 74) und einen elektrischen Empfangsverstärker (65, 75) an den anderen Zweig der elektrischen Gabel (62, 72) geführt ist und daß die Scheitel der optischen Gabeln (63, 73) über einen passiven optischen Koppler (50) und wenigstens einen Lichtwellenleiter (40, 520) miteinander verbunden sind.

9. Übertragungseinrichtung nach Anspruch 8,
**dadurch gekennzeichnet,**
daß in einer der Stellen ein Eingang für Fernsehsignale und/oder Daten an einen weiteren Zweig des elektro-optischen Wandlers (70) und in der anderen Stelle ein weiterer Ausgang des opto-elektrischen Wandlers (64) an einen Ausgang (c0) für die Fernsehsignale und/oder Daten geführt ist.

10. Übertragungseinrichtung nach Anspruch 9,
**dadurch gekennzeichnet,**
daß in einer Verstärkerstelle ein Master für Fernwirksignale und/oder Signale zur Laser-Schutz-Abschaltung Signale einer ersten Frequenz (f1) aussendet und Signale einer zweiten Frequenz (f2) empfängt und in weiteren Stellen des Zusatzsignal-Übertragungsnetzes slaves vorgesehen sind, die Signale der ersten Frequenz (f1) empfangen und Signale der zweiten Frequenz (f2) aussenden und daß der Master und die Slaves jeweils mit ihrem Eingang an einen zusätzlichen Ausgang des elektrischen Empfangsverstärkers (65) angeschlossen und mit ihrem Ausgang an einen zusätzlichen Eingang des elektro-optischen Wandlers 60 geführt sind.

## Claims

1. Transmitting device for the unidirectional transmission of messages via a branched broadband transmission network, and for the bidirectional transmission of additional signals, characterized in that the messages and the additional signals can respectively be transmitted via a dedicated transmission network, and in that the broadband transmission network contains optical fibres (41...4n, 511...5m3) and passive optical couplers (51...5n), and in that the unidirectional message transmission network is assigned a bidirectional additional-signal transmission network containing optical fibres (40, 5m0) and passive optical couplers (50).

2. Transmitting device according to Claim 1, characterized in that the structure of the bidirectional transmission network (40, 5m0, 50) resembles the structure of at least one part of the unidirectional transmission network (41...4n; 511...5m3; 51...5n).

3. Transmitting device according to Claim 1 or 2, characterized in that the unidirectional transmission network (41...4n; 511...5m3; 51...5n) is a programme distribution network in which programmes are distributed from a repeater station to repeater points, and in that the bidirectional transmission network (41...4n; 511... 5m3; 51...5n) contains as a service network auxiliary and/or additional channels (c0, c1...cm; d0, d1...dm; f0, g1...gm) for the programme distribution network.

4. Transmitting device according to one of Claims 1 to 3, characterized in that the additional-signal transmission network belongs to an additional-signal transmitting device in which subordinate service units can be interrogated by means of a master service unit and the master service unit contains an evaluation device for evaluating the response signals, and in that devices of the unidirectional transmission network can be controlled by means of the signals obtained in the evaluation.

5. Transmitting device according to Claim 4, characterized in that the subordinate service units can be interrogated in a temporal sequence by the master service unit, and in that a device for serial asynchronous data transmission using the time-division multiplex method is provided for transmitting the interrogation and response information.

6. Transmitting device according to Claim 5, characterized in that the interrogation signals and the response signals are respectively modulated onto a radiofrequency carrier (f1; f2).

7. Transmitting device according to Claim 5, characterized in that the optical couplers (41...4n) of the programme distribution network are connected via one optical fibre (41...4n) in each case to a laser transmitter of the repeater station, and in that the receivers (21...2m), connected via one further optical fibre (511...5mn) in each case to the optical coupler (41... 4n), of the repeater points respectively contain a monitoring device which signals the receipt or nonreceipt of light at a subordinate surface unit, and in that the repeater station contains a central service unit (310) which interrogates the subordinate service units in temporal sequence and triggers the switching off of a laser transmitter as soon as a prescribed number of messages of "no light" is output to the associated subordinate service unit from the receivers fed by the relevant laser transmitter, and/or a prescribed number of successive messages of "no light" is output from one of the receivers.

8. Transmitting device according to one of Claims 1-7, characterized in that at at least two points of the additional-signal transmission network a connection (d0, d3) for monitoring signals and/or service signals is connected to the vertex of an electric fork (62, 72), and one branch of the electric fork (62, 72) is led via a transmitting amplifier (61, 71) and an electrooptic transducer (60, 70) to a branch of an optical fork (63, 73), and the other branch of the optical fork (63, 73) is led via an optoelectric transducer (64, 74) and an electric receiving amplifier (65, 75) to the other branch of the electric fork (62, 72), and in that the vertex of the optical forks (63, 73) are connected to one another via a passive optical coupler (50) and at least one optical fibre (40, 520).

9. Transmitting device according to Claim 8, characterized in that at one of the points an input for television signals and/or data is led to a further branch of the electrooptic transducer (70), and at the other point a further output of the optoelectric transducer (64) is led to an output (c0) for the television signals and/or data.

10. Transmitting device according to Claim 9, characterized in that at one repeater station a master for telecontrol signals and/or signals for protectively switching off the laser emits signals of a first frequency (f1) and receives signals of a second frequency (f2), and there are provided at further points of the additional-signal transmission network slaves which receive signals of the first frequency (f1) and emit signals of the second frequency (f2), and in that the master and the slaves are in each case connected with their input to an additional output of the electric receiving amplifier (65) and are led with their output to an additional input of the electrooptic transducer (60).

## Revendications

1. Dispositif de transmission unidirectionnelle d'informations par un réseau de transmission ramifié large bande et de transmission bidirectionnelle de signaux supplémentaires, caractérisé en ce que les informations et les signaux supplémentaires peuvent être transmis par un réseau de transmission proprement dit et
le réseau de transmission large bande comprend des guides (41 à 4n, 511 à 5m3) d'ondes optiques et des coupleurs optiques passifs (51 à 5n), et un réseau de transmission de signaux supplémentaires, bidirectionnel et comprenant des guides d'ondes optiques (40, 5m0) et des coupleurs optiques passifs (50) est associé au réseau unidirectionnel de transmission d'informations.

2. Dispositif de transmission suivant la revendication 1, caractérisé en ce que la structure du réseau (40, 5m0, 50) bidirectionnel de transmission est analogue à la structure d'au moins une partie du réseau (41 à 4m ; 511 à 5m3 ; 51 à 5n) unidirectionnel de transmission.

3. Dispositif de transmission suivant la revendication 1 ou 2, caractérisé en ce que le réseau (41 à 4n ; 511 à 5m3 ; 51 à 5n) unidirectionnel de transmission est un réseau de diffusion de programmes, dans lequel les programmes sont diffusés par un poste amplificateur vers des points amplificateurs et le réseau bidirectionnel de transmission (41 à 4n ; 511 à 5m3 ; 51 à 5n) comprend comme réseau de maintenance des canaux auxiliaires et ou supplémentaires (cO, c1 à cm ; d0, d1 à dm ; f0, g1 à gm) pour le réseau de diffusion de programmes.

4. Dispositif de transmission suivant l'une des revendications 1 à 3, caractérisé en ce que le réseau de transmission de signaux supplémentaires fait partie d'un dispositif de transmission de signaux supplémentaires, dans lequel des unités de maintenance subordonnées peuvent être interrogées au moyen d'une unité de maintenance de rang supérieur et l'unité de maintenance de rang supérieur comprend un dispositif d'exploitation des signaux de réponse, et des dispositifs du réseau de transmission unidirectionnel peuvent être commandés au moyen des signaux obtenus lors de l'exploitation.

5. Dispositif de transmission suivant la revendication 4, caractérisé en ce que les unités de maintenance subordonnées peuvent être interrogées dans l'ordre chronologique par l'unité de maintenance de rang supérieur et un dispositif de transmission sérielle asynchrone de données suivant le procédé de multiplexage temporel est prévu pour la transmission des informations d'interrogation et de réponse.

6. Dispositif de transmission suivant la revendication 5, caractérisé en ce que les signaux d'interrogation et les signaux de réponse modulent chacun une porteuse haute fréquence (f1 ; f2).

7. Dispositif de transmission suivant la revendication 5, caractérisé en ce que les coupleurs optiques (41 à 4n) du réseau de distribution de programmes sont connectés chacun par l'intermédiaire d'un guide d'ondes optiques (41 à 4n) à un émetteur laser du poste amplificateur, les récepteurs (21 à 2m), connectés chacun par l'intermédiaire d'un autre guide d'ondes optiques (511 à 5mn) au coupleur optique (41 à 4n), des points amplificateurs comprennent chacun un dispositif de contrôle, qui signale la réception ou la non-réception de lumière à une unité de maintenance subordonnée et le poste amplificateur comprend un unité de maintenance centrale (310), qui interroge les unités subordonnées de maintenance dans l'ordre chronologique et qui déclenche la coupure d'un émetteur laser dès qu'un nombre prescrit de message "pas de lumière" a été fourni à l'unité subordonnée associée de maintenance par les récepteurs alimentés par l'émetteur laser concerné et/ou dès qu'un nombre prescrit de messages successifs "pas de lumière" a été fourni par l'un des récepteurs.

8. Dispositif de transmission suivant l'une des revendications 1 à 7, caractérisé en ce que en au moins deux postes du réseau de transmission de signaux supplémentaires un raccordement (d0, d3) pour des signaux de surveillance et/ou de ligne de service est relié au tronc d'un dispositif de bifurcation électrique (62, 72) et l'une des branches du dispositif de bifurcation électrique (62, 72) est reliée par l'intermédiaire d'un amplificateur (61, 71) d'émission et d'un convertisseur (60, 70) électro-optique à une branche d'un dispositif (63, 73) de bifurcation optique et l'autre branche du dispositif de bifurcation optique (63, 73) est reliée par l'intermédiaire d'un convertisseur opto-électrique (64, 74) et d'un amplificateur (65, 75) électrique de réception à l'autre branche du dispositif de bifurcation électrique (62, 72) et les troncs des dispositifs de bifurcation optiques (63, 73) sont reliés l'un à l'autre par l'intermédiaire d'un coupleur optique passif (50) et par l'intermédiaire d'au moins un guide d'ondes optiques (40, 520).

9. Dispositif de transmission suivant la revendication 8, caractérisé en ce que dans l'un des postes une entrée pour des signaux de télévision et/ou des données est reliée à une autre branche du convertisseur (70) électro-optique et, dans l'autre poste, une autre entrée du convertisseur (64) opto-électrique est reliée à une sortie (c0) pour les signaux de télévision et/ou des données.

10. Dispositif de transmission suivant la revendication 9, caractérisé en ce que dans un poste amplificateur un maître pour des signaux de télécommande et/ou des signaux de coupure de sécurité d'un laser émet des signaux d'une première fréquence (f1) et reçoit des signaux d'une seconde fréquence (f2) et, dans d'autres postes du réseau de transmission de signaux supplémentaires sont prévus des esclaves, qui reçoivent des signaux de la première fréquence (f1) et qui émettent des signaux de la seconde fréquence (f2), le maître et les esclaves sont connectés par leur entrée à une sortie supplémentaire de l'amplificateur (65) électrique de réception et sont connectés par leur sortie à une entrée supplémentaire du convertisseur (60) électro-optique.
